# EUROPÄISCHE PATENTSCHRIFT

(11) **EP 2 635 430 B1**
(45) Veröffentlichungstag und Bekanntmachung des Hinweises auf die Patenterteilung: **09.07.2014**
(21) Anmeldenummer: 11748664.7
(22) Anmeldetag: 25.08.2011
(51) Int. Cl.: B29D 30/00, B29D 30/48, B29B 13/04, B29C 47/88

(54) **VERFAHREN ZUM ABKÜHLEN VON ENDLOSEN APEX-STRÄNGEN**
PROCESS FOR COOLING ENDLESS APEX-STRIPS
PROCÉDÉ DE REFROIDISSEMENT D'UNE BANDE CONTINUE D'UN RAIDISSEUR

(30) Priorität: 05.11.2010 DE 102010060370
(43) Veröffentlichungstag der Anmeldung: 11.09.2013
(73) Patentinhaber: Continental Reifen Deutschland GmbH, 30165 Hannover (DE)
(72) Erfinder: BERGER, Markus, 31319 Sehnde (DE); WICHMANN, Peter, 31535 Neustadt (DE)
(74) Vertreter: Widjaja, Wira
(86) Internationale Anmeldenummer: PCT/EP2011/064646
(87) Internationale Veröffentlichungsnummer: WO 2012/059254

(56) Entgegenhaltungen:
- JP-A- 6 106 531
- JP-A- 8 118 515
- KR-A- 20020 065 992
- KR-A- 20040 043 982
- KR-A- 20040 092 642

## Beschreibung

Die Erfindung betrifft ein Verfahren zum Abkühlen von endlosen Apex-Strängen.
Bei der herkömmlichen Herstellung von Apex-Strängen in der Reifenherstellung wurden zum Abkühlen des Apex-Stranges bisher folgendes Verfahren angewendet. Der Apex-Strang wird über mehrere Förderbänder geführt, wobei sich vorzugsweise paarweise Bänder übereinander befinden. Die Kühlleistung der Förderbänder wird durch die Gesamtlänge aller Förderbänder bestimmt.
Nachteilig an der Abkühlung des Apex-Stranges über Förderbänder ist die große erforderliche Länge der Förderbänder und der damit verbundene große Platzbedarf. Um die Gesamtanlagenlänge klein zu halten, werden diese Bänder häufig über der Maschine montiert, die den Apex-Strang weiterverarbeitet. Jedes Förderband muss einzeln in seiner Geschwindigkeit gesteuert werden.
Die JP 8118515 A, KR 2004 0092642 A, KR 2004 0043982 A, JP 6 103531 A und KR 2002 0065992 A offenbaren bekannte Verfahren zur Behandlung von Apexen.

Der Erfindung liegt die Aufgabe zugrunde, ein Verfahren zu schaffen, bei dem die Abkühlung des Apex-Stranges auf geringem Bauraum möglich ist und dem natürlichen Bestreben des Apex-Stranges beim Abkühlen zu schrumpfen nachgekommen wird.
Gelöst wird diese Aufgabe gemäß Anspruchs 1 mit einem Verfahren mit folgenden Schritten:
a) Bereitstellen eines warmen Apex-Stranges mit einem Extruder und Zuführen mit einer Fördervorrichtung,
b) Auflegen des Apex-Stranges auf ein Fördermittel, wobei der Apex-Strang frei beweglich auf dem Fördermittel aufgelegt und das Fördermittel in einer Endlosschleife geführt wird,
c) Transport des Apex-Stranges auf dem Fördermittel zum Scheitelpunkt des Fördermittelverlaufes,
d) Weitertransport des Apex-Stranges in eine geschlossene Fördermittelspirale um eine vertikale Achse mit mehreren Windungen, wobei die Fördermittelspirale auf der Innenseite von einem geschlossenen Zylinder begrenzt wird,
e) kontinuierliche Abkühlung des Apex-Stranges durch den Transport in der Fördermittelspirale, wobei der Apex-Strang durch die Abkühlung schrumpft und dadurch seine radiale Position zur vertikalen Achse verlagert,
f) Weitertransport des Apex-Stranges auf dem Fördermittel und Weitergabe zu einer Fördervorrichtung,
g) Zurückführen des Fördermittels zur Ausgangsposition bei Schritt b).

Ein Vorteil der Erfindung ist insbesondere darin zu sehen, dass durch das Verfahren nur ein geringer Bauraum beansprucht wird. Weiterhin wird dem natürlichen Bestreben des Apex-Stranges während des Abkühlens zu schrumpfen entsprochen. Dadurch werden Zugspannungen im Apex-Strang minimiert und die Weiterverarbeitung begünstigt. Ein weiterer Vorteil ist, dass sich der Apex-Strang beim Abkühlen in einer Krümmung befindet, die qualitativ der späteren Form bei der Weiterverarbeitung entspricht. Hierdurch liegen günstige Spannungsverhältnisse im Apex-Strang vor und es können hohe Apex-Strang Dimensionen verarbeitet werden.

In einer vorteilhaften Weiterbildung der Erfindung ist vorgesehen, dass der Apex-Strang über ein kurvengängiges Fördermittel in Form eines gitterförmigen Förderbands transportiert wird. Die Abkühlung des Apex-Stranges wird durch die hohe Luftdurchlässigkeit des Förderbandes begünstigt.

In einer weiteren vorteilhaften Weiterbildung der Erfindung ist vorgesehen, dass das Fördermittel wesentlich breiter als der Apex-Strang ist. Dadurch wird ein Schrumpfen des Apex-Stranges ermöglicht, ohne das dieser vom Fördermittel rutscht bzw. um den geschlossenen Zylinder gespannt wird.

In einer weiteren vorteilhaften Weiterbildung der Erfindung ist vorgesehen, dass die Abkühlung des Apex-Stranges durch Lüfter unterstützt wird. Auf diese Weise wird die Abkühlung des Apex-Stranges beschleunigt

In einer weiteren vorteilhaften Weiterbildung der Erfindung ist vorgesehen, dass die Lüfter durch eine Klimaanlage unterstützt werden. Dadurch wird die Abkühlung des Apex-Stranges beschleunigt und eine Anpassung an klimatische Umstände, beispielsweise an sehr warmen Produktionsstandorten, wird ermöglicht.

In einer weiteren vorteilhaften Weiterbildung der Erfindung ist vorgesehen, dass sich an der Außenseite der Förderspirale eine geschlossene zylindrische Hülle befindet in der mindestens eine Tür angebracht wird. Dadurch wird die Zugänglichkeit des Fördermittels erhöht, sowie die Luftzirkulation angeregt.

In einer weiteren vorteilhaften Weiterbildung der Erfindung ist vorgesehen, dass das Fördermittel die Fördermittelspirale von oben nach unten verläuft. Dadurch wird die Abkühlung des Apex-Stranges positiv beeinflusst, da die Wärme die der Apex-Strang zu Beginn der Abkühlung an die Umgebung abgibt frei nach oben entweichen kann, ohne bereits erkaltete Bereiche des Apex-Stranges wieder zu erwärmen. Durch die gegenläufige Bewegung von Luftstrom und Apex-Strang wird die Abkühlwirkung ebenfalls erhöht.

In einer weiteren vorteilhaften Weiterbildung der Erfindung ist vorgesehen, dass die Lüfter oberhalb der Spirale angebracht sind, wodurch der Luftstrom von oben nach unten geführt wird. Dies hat zum Vorteil, dass eine Anpassung an bauliche Gegebenheiten ermöglicht wird.

In einer weiteren vorteilhaften Weiterbildung der Erfindung ist vorgesehen, dass das Fördermittel kreisförmig in der Fördermittelspirale geführt wird. Dadurch kühlt der Apex-Strang mit einer Krümmung ab, wodurch die Weiterverarbeitung positiv beeinflusst wird.

In einer weiteren vorteilhaften Weiterbildung der Erfindung ist vorgesehen, dass der Apex-Strang radial weit außen bezogen auf die vertikale Achse auf dem Fördermittel aufgelegt wird. Durch diese Anordnung wird es dem Apex-Strang während der Abkühlung ermöglicht zu schrumpfen, ohne das die Gefahr besteht, dass der Apex-Strang vom Fördermittel rutscht oder mit dem innenliegenden Zylinder in Berührung kommt.

In einer weiteren vorteilhaften Weiterbildung der Erfindung ist vorgesehen, dass der Apex-Strang bei der Übernahme aus dem Extruder durch einen Sensor überwacht wird, der die Geschwindigkeit des Fördermittels steuert. Dies hat zum Vorteil, dass der Apex-Strang gleichmäßig abtransportiert wird, ohne das es zu Materialstauungen oder Abriss des Materialflusses kommt.

In einer weiteren vorteilhaften Weiterbildung der Erfindung ist vorgesehen, dass der Apex-Strang bei der Übernahme vom Fördermittel in die weiterverarbeitende Station durch einen Sensor überwacht wird, der die Geschwindigkeit des Fördermittels steuert. Dies hat zum Vorteil, dass der Apex-Strang gleichmäßig weitertransportiert wird, ohne das es zu Materialstauungen oder Abriss des Materialflusses kommt.

Anhand eines Ausführungsbeispiels soll die Erfindung näher erläutert werden. Es zeigen:
Fig. 1: das erfindungsgemäße Verfahren
Fig. 2: das erfindungsgemäße Verfahren in der Draufsicht
Fig. 3: den Apex-Strang im Querschnitt

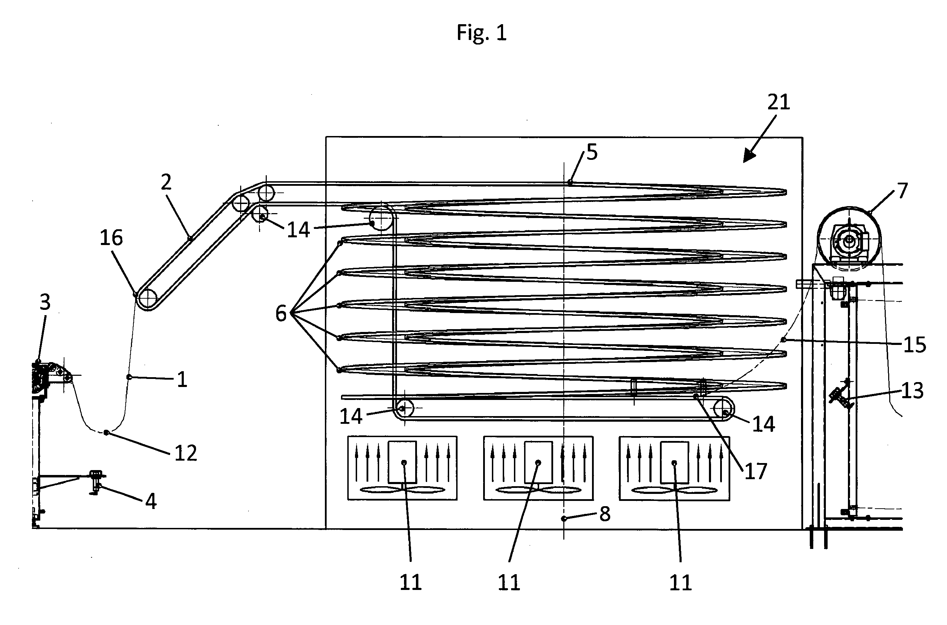

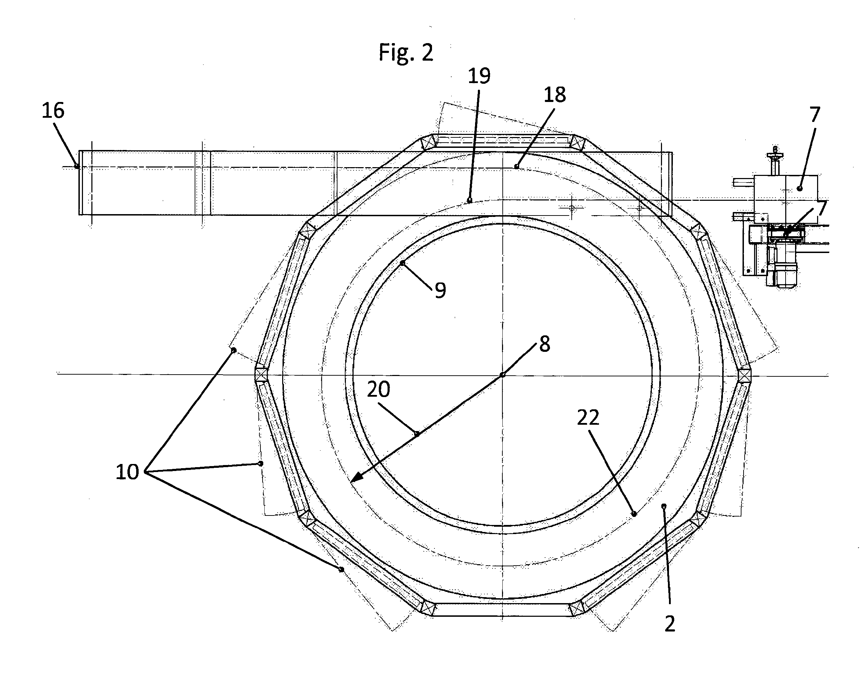

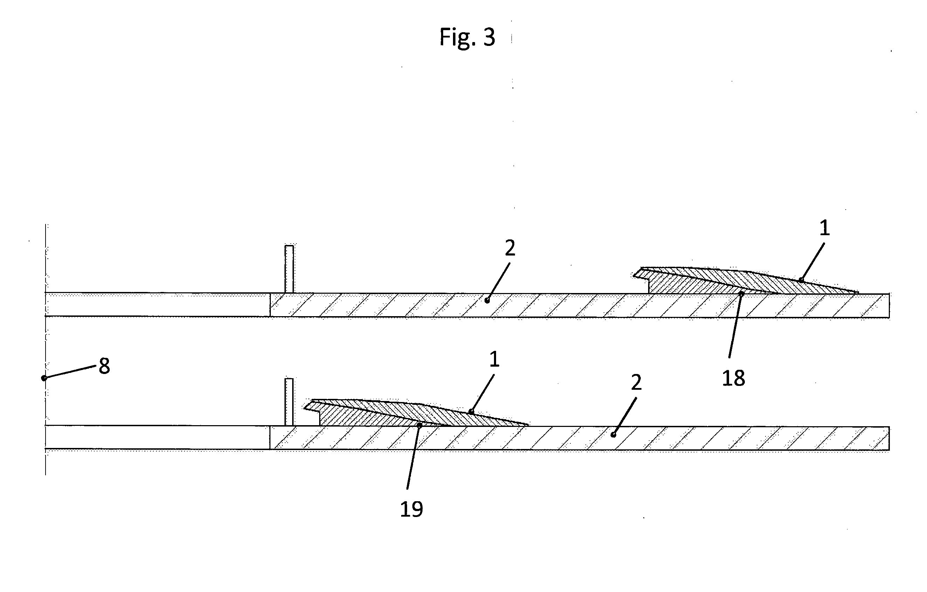

Die Figur 1 zeigt eine perspektivische Darstellung des erfindungsgemäßen Verfahrens. Der extrudierte, warme Apex-Strang 1 wird aus der Fördervorrichtung 3 nach dem Extruder an der Position 16 an ein Fördermittel 2 übergeben. Dabei wird über eine Schleife 12, die der Apex-Strang 1 zwischen Extruder 3 und Fördermittel 2 bildet und einem Sensor 4, der die Höhe der Schleife kontrolliert, die Geschwindigkeit des Fördermittels 2 bestimmt sowie geregelt.
Das Fördermittel 2 ist in diesem Ausführungsbeispiel als kurvengängiges Förderband umgesetzt. Das Förderband ist gitterförmig ausgeführt, sodass auch die auf dem Fördermittel 2 aufliegende Seite des Apex-Stranges 1 vom Luftstrom erreicht und gekühlt werden kann. Weiterhin sind andere kurvengängige Fördermittel, wie Rollenförderer oder Förderkettenbänder mit Querrollen denkbar.
Der Apex-Strang 1 wird durch das Fördermittel 2 aufwärts zum Scheitelpunkt 5 transportiert, um von dort spiralförmig über mehrere Windungen 6 an eine weitere Fördervorrichtung 7 übergeben zu werden. Anschließend erfolgt die Weitergabe an eine weiterverarbeitende Station, die den Apex-Strang auf einen Wulstkern wickelt. Die Form der Fördermittelspirale 21 ist in diesem Ausführungsbeispiel kreisförmig, es sind jedoch auch andere geometrische Formen denkbar. Die kreisförmige Ausführung bietet sich jedoch besonders an, da durch das Abkühlen des Apex-Stranges 1 in einer kreisförmigen Form die Weiterverarbeitung des Apex-Stranges positiv beeinflusst wird. Es bilden sich durch diese Anordnung weniger Spannungen im Apex-Strang, die sich auf nachfolgende Bearbeitungsschritte negativ auswirken können. Das Fördermittel 2 ist signifikant breiter als der Apex-Strang 1, wie insbesondere Fig. 3 zeigt. Der Apex-Strang 1 wird auf das Fördermittel 2 radial weit außen aufgelegt und läuft so auf dem äußeren Durchmesser in die Spirale ein. Auf seinem Weg durch die Spirale kühlt der Apex-Strang 1 kontinuierlich ab und zieht sich aufgrund seiner Materialeigenschaften zusammen. Der Apex-Strang 1 kann auf dem Fördermittel 2 frei rutschen.
Die Förderbandspirale 21 ist auf der Innenseite von einem geschlossenen, um seine Hochachse 8 drehbar angetriebenen Zylinder 9 begrenzt, der nur in der Figur 2 dargestellt ist. Auf der Außenseite befindet sich eine geschlossene Hülle, die mindestens eine Tür 10 besitz. Es wird so ein kreisförmiger, senkrecht stehender Kanal gebildet, der vertikal von Luft durchströmt werden kann. Zur Verstärkung des Luftstromes und zur Regulierung der Kühlleistung werden Lüfter 11 eingesetzt, die vorzugsweise Luft von unten nach oben durch den Ringkanal blasen. Eine Anordnung der Lüfter 11 oberhalb der Fördermittelspirale ist ebenfalls denkbar.
Nach Durchlaufen der Fördermittelspirale 21 wird der Apex-Strang 1 an Position 17 vom Fördermittel 2 gelöst und an die Fördervorrichtung 7 übergeben. Dabei bildet der Apex-Strang 1 erneut eine Schleife 15, deren Höhe durch den Sensor 13 überwacht wird. Der Sensor 13 regelt die Geschwindigkeit der Fördervorrichtung 7.
Das Fördermittel 2 wird über mehrere Umlenkrollen 14 zurück an die Position 16 geführt. Dadurch wird das Fördermittel in Form einer Endlosschleife geführt.

Die Figur 2 zeigt das erfindungsgemäße Verfahren in der Draufsicht. An Position 16 wird der Apex-Strang 2 vom Extruder 3 übernommen und radial weit außen auf der Position 18 auf das Förderband aufgelegt. Während der Apex-Strang 2 die Fördermittelspirale durchläuft verkleinert sich durch die Abkühlung kontinuierlich sein Aufliegeradius 20 auf dem Fördermittel 2. Die Linie 22 stellt den Linienverlauf des Apex-Stranges 1 auf dem Fördermittel 2 dar. Das Fördermittel 2 liegt radial am Zylinder 9 an, der ebenfalls rotiert und angetrieben wird. Die Türen 10 ermöglichen die Zugänglichkeit des Fördermittels 2 und können die Luftzirkulation im Zylinder 9 unterstützen.

Die Figur 3 zeigt den Apex-Strang 1 auf dem Fördermittel 2 vor und nach dem Durchlaufen der Fördermittelspirale 21. Im oberen Teil der Figur 3 wird der Apex-Strang 1 in bezug auf die Hochachse 18 radial weit außen auf das Fördermittel 2 aufgelegt. Während der Apex-Strang 1 die Fördermittelspirale 21 durchläuft und dabei abkühlt, verlagert er seine Lage radial nach innen in Richtung Hochachse 18, wie der untere Teil der Figur 3 zeigt.

### Bezugszeichenliste

### (ist Teil der Beschreibung)

- 1: Apex-Strang
- 2: Fördermittel bzw. kurvengängiges Förderband
- 3: Fördermittel nach dem Extruder
- 4: Sensor
- 5: Scheitelpunkt
- 6: Windungen
- 7: Fördervorrichtung
- 8: Hochachse bzw. vertikale Achse
- 9: Zylinder
- 10: Türen
- 11: Lüfter
- 12: Schleife
- 13: Sensor
- 14: Umlenkrolle
- 15: Schleife
- 16: Position: Übernahme Apex-Strang vom Extruder
- 17: Position: Trennung Apex-Strang vom Fördermittel
- 18: Position des Auflegepunktes radial weit außen auf dem Fördermittel
- 19: Radial weiter innenliegende Spur
- 20: Aufliegeradius
- 21: Fördermittelspirale
- 22: Linienverlauf

## Patentansprüche

1. Verfahren zum Abkühlen von endlosen Apex-Strängen (1) mit folgenden Schritten:
a) Bereitstellen eines warmen Apex-Stranges (1) mit einem Extruder und Zuführten mit einer Fördervorrichtung (3),
b) Auflegen des Apex-Stranges (1) auf ein Fördermittel (2), wobei der Apex-Strang (1) frei beweglich auf dem Fördermittel (2) aufgelegt und das Fördermittel (2) in einer Endlosschleife geführt wird,
c) Transport des Apex-Stranges (1) auf dem Fördermittel (2) zum Scheitelpunkt (5) des Fördermittelverlaufes,
d) Weitertransport des Apex-Stranges (1) in eine geschlossene Fördermittelspirale (21) um eine vertikale Achse (8) mit mehreren Windungen (6), wobei die Fördermittelspirale (21) auf der Innenseite von einem geschlossenen Zylinder (9) begrenzt wird,
e) kontinuierliche Abkühlung des Apex-Stranges (1) durch den Transport in der Fördermittelspirale (21), wobei der Apex-Strang(1) durch die Abkühlung schrumpft und dadurch seine radiale Position zur vertikalen Achse(8) verlagert,
f) Weitertransport des Apex-Stranges(1) auf dem Fördermittel (2) und Weitergabe zu einer Fördervorrichtung (7),
g) Zurückführen des Fördermittels (2) zur Ausgangsposition bei Schritt b).

2. Verfahren nach Anspruch 1, **dadurch gekennzeichnet, dass** der Apex-Strang (1) über ein kurvengängiges Fördermittel (2) in Form eines Förderkettenbands transportiert wird.

3. Verfahren nach Anspruch 1 oder 2, **dadurch gekennzeichnet, dass** der Apex-Strang (1) über ein kurvengängiges Fördermittel (2) in Form von Rollenförderern oder Förderbänder transportiert wird.

4. Verfahren nach Anspruch einem der vorhergehenden Ansprüche, **dadurch gekennzeichnet, dass** das Fördermittel (2) wesentlich breiter als der Apex-Strang (1) ist.

5. Verfahren nach einem der vorhergehenden Ansprüche, **dadurch gekennzeichnet, dass** die Abkühlung des Apex-Stranges durch einen Lüfter (11) unterstützt wird.

6. Verfahren nach einem der vorhergehenden Ansprüche, **dadurch gekennzeichnet, dass** die Lüfter (11) durch eine Klimaanlage unterstützt werden.

7. Verfahren nach einem der vorhergehenden Ansprüche, **dadurch gekennzeichnet, dass** die Außenseite der Förderspirale(21) mit einer zylindrischen Hülle geschlossen ist, die mindestens eine Tür (10) enthält.

8. Verfahren nach einem der vorhergehenden Ansprüche, **dadurch gekennzeichnet, dass** das Fördermittel (2) die Fördermittelspirale (21) von oben nach unten durchläuft.

9. Verfahren nach einem der vorhergehenden Ansprüche, **dadurch gekennzeichnet, dass** die Lüfter (11) oberhalb der Spirale (21) angebracht sind, wodurch der Luftstrom von oben nach unten geführt wird.

10. Verfahren nach einem der vorhergehenden Ansprüche, **dadurch gekennzeichnet, dass** das Fördermittel (2) kreisförmig in der Fördermittelspirale (21) geführt wird.

11. Verfahren nach einem der vorhergehenden Ansprüche, **dadurch gekennzeichnet, dass** der Apex-Strang (1) radial weit außen bezogen auf die vertikale Achse (8) auf dem Fördermittel (2) aufgelegt wird.

12. Verfahren nach einem der vorhergehenden Ansprüche, **dadurch gekennzeichnet, dass** der Apex-Strang (1) bei der Übernahme aus dem Extruder (16) durch einen Sensor (4) überwacht wird, der die Geschwindigkeit des Fördermittels (2) steuert.

13. Verfahren nach einem der vorhergehenden Ansprüche, **dadurch gekennzeichnet, dass** der Apex-Strang (1) bei der Übernahme von dem Fördermittel (2) an eine Fördervorrichtung (7) durch einen Sensor (13) überwacht wird, der die Geschwindigkeit der Fördervorrichtung (7) steuert.

## Claims

1. Process for cooling continuous apex strands (1), comprising the following steps:
a) providing a warm apex strand (1) by means of an extruder and feeding it in by means of a conveying device (3),
b) placing the apex strand (1) onto a conveying means (2), the apex strand (1) being placed on the conveying means (2) in a freely movable state and the conveying means (2) being guided in an endless loop,
c) transporting the apex strand (1) on the conveying means (2) to the apex point (5) of the conveying means path,
d) transporting the apex strand (1) further into a closed conveying means spiral (21) about a vertical axis (8) with a number of turns (6), the conveying means spiral (21) being bounded on the inner side by a closed cylinder (9),
e) continuously cooling the apex strand (1) by transporting it in the conveying means spiral (21), the apex strand (1) shrinking as a result of the cooling and thereby shifting its radial position in relation to the vertical axis (8),
f) transporting the apex strand (1) further on the conveying means (2) and passing it on to a conveying device (7),
g) returning the conveying means (2) to the starting position at step b).

2. Process according to Claim 1, **characterized in that** the apex strand (1) is transported by way of a curve-negotiating conveying means (2) in the form of a conveying chain belt.

3. Process according to Claim 1 or 2, **characterized in that** the apex strand (1) is transported by way of a curve-negotiating conveying means (2) in the form of roller conveyors or conveyor belts.

4. Process according to one of the preceding claims, **characterized in that** the conveying means (2) is significantly wider than the apex strand (1).

5. Process according to one of the preceding claims, **characterized in that** the cooling of the apex strand is assisted by a fan (11).

6. Process according to one of the preceding claims, **characterized in that** the fans (11) are backed up by an air conditioning unit.

7. Process according to one of the preceding claims, **characterized in that** the outer side of the conveying spiral (21) is closed by a cylindrical shell, which contains at least one door (10).

8. Process according to one of the preceding claims, **characterized in that** the conveying means (2) runs through the conveying means spiral (21) from the top downwards.

9. Process according to one of the preceding claims, **characterized in that** the fans (11) are mounted above the spiral (21), whereby the air stream is conducted from the top downwards.

10. Process according to one of the preceding claims, **characterized in that** the conveying means (2) is guided circularly in the conveying means spiral (21).

11. Process according to one of the preceding claims, **characterized in that** the apex strand (1) is placed on the conveying means (2) radially far outside with respect to the vertical axis (8).

12. Process according to one of the preceding claims, **characterized in that**, as it is being taken over from the extruder (16), the apex strand (1) is monitored by a sensor (4), which controls the speed of the conveying means (2).

13. Process according to one of the preceding claims, **characterized in that**, as it is being taken over from the conveying means (2) onto a conveying device (7), the apex strand (1) is monitored by a sensor (13), which controls the speed of the conveying device (7).

## Revendications

1. Procédé de refroidissement de boudins de bourrage sur tringle sans fin (1) comprenant les étapes suivantes :
a) produire un boudin de bourrage sur tringle (1) chaud à l'aide d'une extrudeuse et l'acheminer à l'aide d'un dispositif de transport (3) ;
b) poser le boudin de bourrage sur tringle (1) sur un moyen de transport (2), le boudin de bourrage sur tringle (1) étant posé de manière à pouvoir se déplacer librement sur le moyen de transport (2) et le moyen de transport (2) étant guidé dans une boucle sans fin ;
c) transporter le boudin de bourrage sur tringle (1) sur le moyen de transport (2) jusqu'au sommet (5) du cheminement du moyen de transport ;
d) continuer le transport du boudin de bourrage sur tringle (1) dans une spirale fermée (21) du moyen de transport présentant plusieurs spires (6) autour d'un axe vertical (8), la spirale (21) du moyen de transport étant délimitée sur le côté intérieur par un cylindre (9) fermé ;
e) refroidir en continu le boudin de bourrage sur tringle (1) par le transport dans la spirale (21) du moyen de transport, le boudin de bourrage sur tringle (1) se rétractant suite au refroidissement, ce qui déplace ainsi sa position radiale par rapport à l'axe vertical (8) ;
f) continuer le transport du boudin de bourrage sur tringle (1) sur le moyen de transport (2) et le transférer vers un dispositif de transport (7) ;
g) renvoyer le moyen de transport (2) dans sa position de départ à l'étape b).

2. Procédé selon la revendication 1, **caractérisé en ce que** le boudin de bourrage sur tringle (1) est transporté par le biais d'un moyen de transport (2) capable d'un trajet courbe sous la forme d'une bande transporteuse à chaîne.

3. Procédé selon la revendication 1 ou 2, **caractérisé en ce que** le boudin de bourrage sur tringle (1) est transporté par le biais d'un moyen de transport (2) capable d'un trajet courbe sous la forme de convoyeurs à rouleaux ou de bandes transporteuses.

4. Procédé selon l'une quelconque des revendications précédentes, **caractérisé en ce que** le moyen de transport (2) est sensiblement plus large que le boudin de bourrage sur tringle (1).

5. Procédé selon l'une quelconque des revendications précédentes, **caractérisé en ce que** le refroidissement du boudin de bourrage sur tringle est assisté par un ventilateur (11).

6. Procédé selon l'une quelconque des revendications précédentes, **caractérisé en ce que** les ventilateurs (11) sont assistés par une installation de climatisation.

7. Procédé selon l'une quelconque des revendications précédentes, **caractérisé en ce que** le côté extérieur de la spirale (21) de transport est fermé par une enceinte cylindrique qui contient au moins une porte (10).

8. Procédé selon l'une quelconque des revendications précédentes, **caractérisé en ce que** le moyen de transport (2) parcourt la spirale (21) du moyen de transport de haut en bas.

9. Procédé selon l'une quelconque des revendications précédentes, **caractérisé en ce que** les ventilateurs (11) sont montés au-dessus de la spirale (21), de sorte que le flux d'air soit guidé de haut en bas.

10. Procédé selon l'une quelconque des revendications précédentes, **caractérisé en ce que** le moyen de transport (2) est guidé suivant une trajectoire circulaire dans la spirale (21) du moyen de transport.

11. Procédé selon l'une quelconque des revendications précédentes, **caractérisé en ce que** le boudin de bourrage sur tringle (1) est posé radialement largement à l'extérieur par rapport à l'axe vertical (8) sur le moyen de transport (2).

12. Procédé selon l'une quelconque des revendications précédentes, **caractérisé en ce que** le boudin de bourrage sur tringle (1), lors du transfert hors de l'extrudeuse (16), est contrôlé par un capteur (4) qui commande la vitesse du moyen de transport (2).

13. Procédé selon l'une quelconque des revendications précédentes, **caractérisé en ce que** le boudin de bourrage sur tringle (1), lors du transfert depuis le moyen de transport (2) à un dispositif de transport (7), est contrôlé par un capteur (13) qui commande la vitesse du dispositif de transport (7).
